# EUROPEAN PATENT SPECIFICATION

(11) **EP 2 094 133 B1**
(45) Date of publication and mention of the grant of the patent: **05.06.2013**
(21) Application number: 07849765.8
(22) Date of filing: 23.11.2007
(51) Int. Cl.: A47J 31/06

(54) **ESPRESSO COFFEE MACHINE**
ESPRESSO-KAFFEEMASCHINE
MACHINE À CAFÉ EXPRESSO

(30) Priority: 24.11.2006 IT GE20060112
(43) Date of publication of application: 02.09.2009
(73) Proprietor: Espressocap S.p.A., 20122 Milano (IT)
(72) Inventor: BARDAZZI, Bruno, San Piero A Sieve (FI) (IT)
(74) Representative: Cacciamani, Clizia
(86) International application number: PCT/IT2007/000818
(87) International publication number: WO 2008/078348

(56) References cited:
- EP-A- 1 500 357
- US-A1- 2003 056 661
- US-A1- 2005 160 919

## Description

This invention relates to espresso coffee machines wherein coffee is introduced as pre-packaged cartridges, i.e. the so-called "pods" or "capsules", or the like.

Until few years ago, espresso coffee machines were substantially intended for a professional use, but nowadays they are also widely employed at home. In order to provide a simpler and more practical use of these machines, while standardizing the quality of the dispensed product, i.e. the coffee brew, for some years pre-packaged portions of coffee powder have been made, the portions being enclosed in water-permeable containers made of paper, plastic material, aluminum or the like, which are commonly called capsules.

The espresso machine which uses this type of capsule is undoubtedly much simpler to use and provides a coffee brew having characteristics which depend solely on the quantity of water used; basically those steps such as filling the filter and compressing it have been eliminated, which steps rely too much on discretion for the product to be accessible on a large scale. Furthermore, the machine is very much cleaner, and maintenance thereof does not involve particular problems.

Patent Application No. GE 2003A000045, in the name of the same Applicant, discloses an espresso coffee machine comprising a water storage tank, a pump for delivering said water to a boiler, a hot water supply assembly, and filter-holder means to receive a portion of coffee powder, which is preferably pre-packaged: said supply assembly and said filter-holder means are sealingly engaged with each other, and the path of the engaging movement lies in a plane which is substantially perpendicular to the middle plane of engagement of said supply assembly and said filter-holder means, the surfaces of said supply assembly and said filter-holder means contacting only upon engagement therebetween. This machine has a high level of efficiency and functionality, however, in this case as in other cases, it appears crucial how the coffee brew is released from the capsule, because the quality of the product to be consumed depends on this factor.

Patent Application No. GE2004A000020, in the name of the same Applicant, discloses a pre-packaged portion and a dispensing assembly adapted for use with the same, in which the dispensing assembly comprises punching means to create at least one breach in a wall of the cartridge containing said portion, said wall being faced to said dispensing assembly, the lips of said breach being sealingly abutted against said punching means until a given pressure is reached. This solution creates a pressure build-up within the cartridge but, unlike with other known devices, the whole structure of the cartridge doesn't need to collapse in order to allow the coffee brew to be dispensed.

US 2005/0160919 discloses a further coffee machine.

An aim of the present invention is to provide an espresso coffee machine able to enhance the qualitative characteristics of the dispensed product, particularly in relation to the so called "coffee cream", i.e. a fine dispersion of air bubbles within the dispensed brew. Another aim of this invention is to prevent the product to be dispensed for consumption and discharge it through an alternate path if it doesn't have the above mentioned qualitative characteristics, so as to prevent a performance decrease of the machine while warning the user about a functional defect which is most probably due to a defective construction of the capsule itself.

Accordingly, the object of the present invention as defined in claim 1 is an espresso coffee machine comprising a water storage tank, a pump for delivering said water to a boiler, a hot water supply assembly, and filter-holder means to receive a pre-packaged portion of coffee powder; said supply assembly and said filter-holder means are sealingly engaged with each other and the path of the engaging movement lies in a plane substantially perpendicular to the middle plane of engagement of said supply assembly and said filter-holder means, the surfaces of said supply assembly and said filter-holder means contacting only upon engagement therebetween; said filter-holder means comprising punching means to create at least one breach in the wall of a capsule containing said portion of coffee powder, said wall being faced to said punching means, sealing means being provided on the bottom wall of said filter-holder means to surround the area of said breach, valve means being arranged between said bottom wall of said filter-holder means and a coffee brew dispensing duct, said valve means being suitably calibrated.

Said valve means include a membrane made of an elastomeric material with an axial micro-hole, the pressure of the brew collected at the bottom of said filter-holder means allowing the coffee brew to flow towards the supply duct. Furthermore, said filter-holder means have at least one discharge path at the exit edge thereof to discharge the fluid collected therein.

Other advantages and features will be appearent from the following description of an embodiment of the present invention, which is provided by way of illustration, and not by way of limitation, with reference to the accompanying drawing, wherein:
Figure 1 is a longitudinal sectional view of an enlarged detail of the machine according to the present invention;
Figure 2 is a perspective view of an enlarged detail of Figure 1.

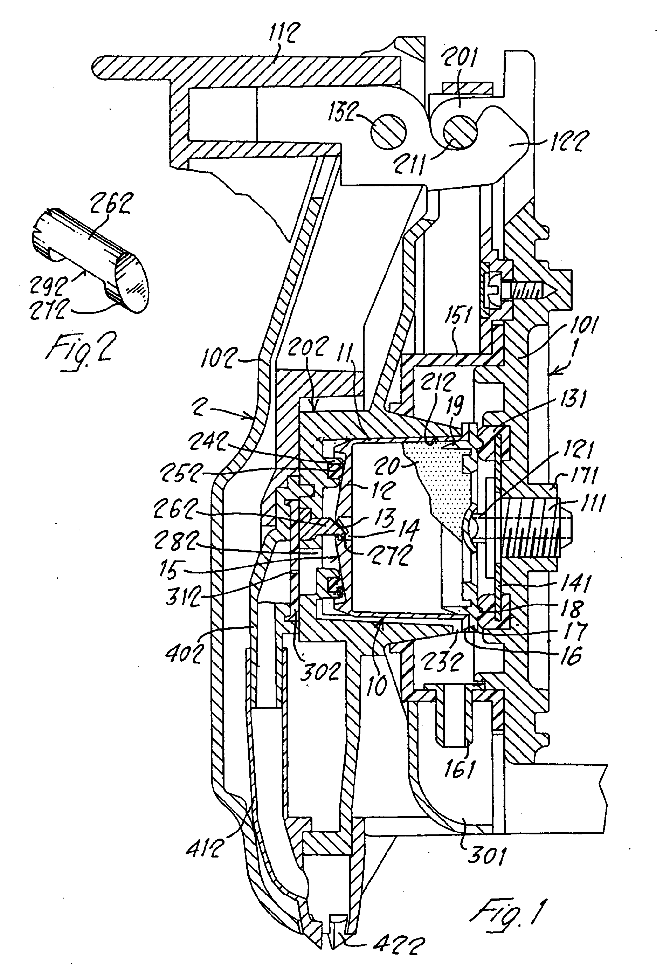

Figure 1 is a longitudinal sectional view of a detail which illustrates an embodiment of the machine according to the invention; reference numeral 1 denotes a pressurized hot water supply assembly of the machine according to the present invention. A duct 171 is formed on a wall 101 in communication with a boiler (not shown in the figure) of the espresso coffee machine, a threaded bushing 111 being screwly engaged in the duct 171 and extending from a pressurized hot water supply nozzle 121 to the outside face of the wall 101. The nozzle 121 is located in the center of a plate 141 enclosed in an annular sealing member 131 which is sealingly engaged by an annular protrusion 18 axially projecting from a cover 17 of a pre-packaged coffee cartridge 10, hereinafter termed the capsule 10.

Such capsule 10 comprises substantially frustoconical side walls 11 provided with a radial flange 16 at the exit edge thereof. Furthermore, the capsule 10 includes the above mentioned cover 17 having the outwardly facing protrusion 18 and an axial flange facing towards the inside of the capsule 10, which is filled with coffee powder 20. A bottom wall 12 is provided with a taper 13 where a breach 14 is to be created. An outer face 15 of the bottom wall 12 is smooth and substantially frustoconical in shape.

Filter-holder means 2 of the machine according to the invention include a hatch 102 which is hinged to the body of the machine at one end as already known from the above mentioned patent applications in the name of the same Applicant. At the other end, the hatch102 comprises a lever 112 which is pivotally connected to a pin 522 having an engaging tooth 122 at the free end thereof to cooperate with a pin 211 projecting from a bracket 201 which is coupled to the body of the machine. The hatch 102 includes a filter holder 202 with a cavity 212 where the capsule 10 is placed; an housing 242 is formed on the bottom wall of the cavity 212 to receive annular sealing means 252 which cooperate with the face 15 of the bottom wall 12 of the capsule. A punching tooth 262 axially protrudes from the bottom wall of the cavity 212, the punching tooth 262 comprising a tip 272 which punches the taper 13 of the wall 12 to create the breach 14. Beside the punching tooth 262, the bottom wall of the cavity 212 includes a passage 282 in communication with a coffee brew dispensing duct 402 through a flexible membrane 302 which is axially provided with a micro-hole 312; the duct 402 conveys the coffee to a dispensing nozzle 422 through a tube 412, such dispensing nozzle 422 being positioned at the end of the hatch 102 which is opposite to the end bearing the lever 112. The side walls of the filter holder 202 cooperate with a gasket 151 into which they are inserted, and such gasket has a radial discharge spout 161 in communication with a corresponding duct 301; an opening 232 is formed on the exit edge of the filter holder.

Figure 2 shows a particular of the machine in Figure 1 relative to the punching tooth 262. A cavity 292 is formed in the lower portion of the tooth to make more effective the cooperation between said tooth 262 and the bottom wall 12 of the capsule 10, which is beneficial for the coffee brew to be dispensed. In fact, the presence of this cavity 292 simplifies and regulates the downflow after the brew inside the capsule 10 has reached the desired pressure.

The operation of the espresso coffee machine according to the present invention will be clear from the following. The capsule 10 is introduced into the cavity 121 of the filter holder 202 and the hatch102 is closed by engaging the tooth 122 of the lever 112 to the pin 211 as shown in the figure. While the hatch 102 is being closed, the tip 272 of the punching tooth 262 punches the taper 13 of the wall 12 of the capsule to create the breach 14; pressurized hot water is then supplied by the nozzle 121 into the capsule 10 to extract the coffee brew from the coffee powder 20 inside the capsule. When the desired pressure inside the capsule 10 has been reached, the breach 14 is enlarged, and the coffee brew is released from the capsule 10; at this time, the membrane 302, along with the sealing means 252, determines an area in which the pressure still has to be increased in order to allow the coffee brew to flow into the duct 402, and then towards the dispensing nozzle 422, by way of an expansion of the micro-hole 312. This additional increase in pressure, along with the ejection effect against the wall of the duct 402, provides a far superior product in terms of appearance and organoleptic characteristics by conferring to the brew that particular "coffee cream effect" which is so widely appreciated. Furthermore, the seal between the annular sealing means 252 and the face 15 of the wall 12 of the capsule reduces the risk of pressure loss in the pressurized hot water flow, therefore improving the overall performance of the machine.

According to another aspect of the invention, it appears useful to provide an opening 232 at the exit edge of the side walls of the filter holder 202; in fact, if the capsule 10 is not optimally positioned, or if the bottom wall 12, i.e. the face 15 thereof, doesn't have a smooth construction, i.e. the face 15 has an unevenness which impairs the seal of the sealing means 252, then the coffee brew will flow naturally through the easiest path, i.e. the path leading to said opening 232 and therefore to the gasket 151 and the discharge spout 161. In this way it is possible to avoid dispensing a product which doesn't meet the qualitative requirements of the consumer, while warning about a possible wear of the sealing means 252 or a possible obstruction of the micro-hole 312 in the membrane 252. Ultimately, this feature enhances the operational safety of the machine.

Accordingly, the so conceived coffee machine improves the quality of the dispensed product and assures the control of the quality standards achieved.

## Claims

1. Espresso coffee machine comprising a hot water supply assembly (1) and filter-holder means (2) to receive a pre-packaged portion of coffee powder; said supply assembly (1) and said filter-holder means (2) are sealingly engaged with each other and the path of the engaging movement lies in a plane substantially perpendicular to the middle plane of engagement of said supply assembly (1) and said filter-holder means (2), the surfaces of said supply assembly (1) and said filter-holder means (2) contacting only upon engagement therebetween, said filter-holder means (2, 202, 212) comprising punching means (262, 272) to create at least one breach (14) in a wall (12) of a capsule (10) containing said portion of coffee powder, said wall (12) being faced to said punching means (262, 272), **characterized in that** sealing means (252) are provided on a bottom wall of said filter-holder means (2, 202, 212) to surround the area of said breach (14), valving means (302, 312) being arranged between said bottom wall of said filter-holder means (2, 202, 212) and a coffee brew dispensing duct (402, 412, 422), said valving means (302, 312) being suitably calibrated, wherein said valving means include a membrane (302) made of an elastomeric material with an axial micro-hole (312), the pressure of the brew collected at the bottom of said filter-holder means (202, 212) allowing the coffee brew to flow towards the dispensing duct (402).

2. Espresso coffee machine according to Claim 1, wherein said dispensing duct (402) has at least one wall which is perpendicular to the axis of said micro-hole (312) of said membrane (302).

3. Espresso coffee machine according to Claim 1 or 2, wherein said filter-holder means (202, 212) have at least one opening (232) at an exit edge thereof, said opening (232) being in communication with a discharge path (161, 301)

4. Espresso coffee machine according to any one of the preceding claims from 1 to 3, wherein said punching means include a tooth (262) which is substantially cylindrical in section, said tooth having a tip (272), a large discharge cavity (292) being provided between said tip (272) and a base of said tooth (262).

## Patentansprüche

1. Espresso-Kaffeemaschine umfassend eine Warmwasserversorgung Anordnung (1) und Filter-Halter (2), um eine abgepackte Kaffeepulver-Portion (10) erhalten; der Versorgunganordnung (1) und dem Filterträger (2) dichtend miteinander in Eingriff gebracht und der Weg von der Einrückbewegung in einer Ebene im wesentlichen senkrecht zu der Mittelebene des Eingriffs der Versorgungsanordnung (1), und dem Filterträger (2), wobei die Oberflächen der Versorgungsanordnung (1) und dem Filterträger (2) In-Kontakt nur beim Eingriff dazwischen, wobei der Filter-Halter (2, 202, 212) umfassend Stanzeinrichtung (262, 272) mit mindestens einer gegen (14) in einer Wand (12) von einer Kapsel (10) mit der Kaffeepulver-Portion zu schaffen, die Wand (12) gegenüber an der Stanzeinrichtung (262, 272) ist, **dadurch gekennzeichnet** in dass Dichtungsmittel (252) auf einer Bodenwand des Filterhalters vorgesehen sind (2, 202, 212) zu umgeben die Fläche der Verletzung (14), Ventilmittel (302, 312) angeordnet zwischen Bodenwand des Filterhalters (2, 202, 212) und ein Kaffeegetränk Abgabeleitung (402.412, 422), die Ventileinrichtung (302, 312) entsprechend kalibriert wird, wobei die Ventileinrichtung eine Membran (302) aus einem Elastomeren mit einem axialen Mikroloch (312) gebildet, der Druck von des Gebräus am Boden des Filterhalters (202. 212) gesammelt so dass der Kaffeegetränk in Richtung der Abgabeleitung (402) zu fließen.

2. Espresso-Kaffeemaschine nach Anspruch 1 enthält, wobei die Abgabeleitung (402) mindestens eine Wand aufweist, die senkrecht zur Achse des Mikroloch (312) der Membran (302).

3. Espresso-Kaffeemaschine nach Anspruch 1 oder Anspruch 2, wobei der Filterträger (202, 212) mindestens eine Öffnung (232) an einem Ausgang Kante davon aufweist, wobei die Öffnung (232) in Kommunikation mit einer Entladungsstrecke (161, 301) ist.

4. Espresso-Kaffeemaschine nach einem der vorangehenden Ansprüche 1 bis 3, wobei die Stanzeinrichtung eine Zahn (262) aufweist, der im wesentlichen zylindrische Abschnitt ist, der Zahn eine Spitze (272) aufweist, eine große Entlastung Hohlraum (292) vorgesehen ist, zwischen der Spitze (272) und eine Basis des Zahns (262).

## Revendications

1. Machine à café expresso comprenant un ensemble d'alimentation en eau chaude (1) et des moyens porte-filtre (2) pour recevoir une portion pré-emballé de poudre de café, ledit ensemble d'alimentation (1) et ledit moyen porte-filtre(2) sont en contact étanche avec l'autre et la trajectoire du mouvement d'engagement se trouve dans un plan sensiblement perpendiculaire au plan moyen de l'engagement dudit ensemble d'alimentation (1) et ledit moyen de filtre-support (2), les surfaces dudit ensemble d'alimentation (1) et ledit moyen porte-filtre(2) étant en contact seulement lors de l'engagement entre eux, ledit moyen porte-filtre (2, 202, 212) comprenant des moyens de perforation (262,272) pour créer au moins une rupture (14) dans une paroi (12) d'une capsule (10) contenant ladite portion de la poudre de café, ladite paroi (12) étant face audit moyen de perforation (262, 272), **caractérisé en ce que** des moyens d'étanchéité (252) sont prévus sur une paroi de fond dudit moyen porte-filtre (2, 202, 212) pour entourer la zone de ladite rupture (14), moyen de soupape (302, 312) étant disposés entre ladite paroi de fond dudit moyen de porte-filtre (2, 202, 212) et un conduit de distribution de café infusion (402,412, 422), lesdits moyens de soupape (302, 312) étant convenablement calibrés. dans lequel lesdits moyens de soupape comprennent une membrane (302) faite d'un matériau élastomère avec un 20 micro-trou axial (312), la pression de l'infusion collectée à la partie inférieure dudit moyen porte-filtre (202. 212) permettant à l'infusion de café à s'écouler vers le conduit de distribution (402).

2. Machine à café expresso selon la revendication 1. dans lequel ledit conduit de distribution (402) comporte au moins une paroi qui est perpendiculaire à l'axe 25 de ladite micro-trous (312) de ladite membrane (302).

3. Machine à café expresso selon la revendication 1 ou 2, dans lequel lesdits moyens de support à filtre (202, 212) présentent au moins une ouverture (232) à un bord de sortie de celui-ci, ladite ouverture (232) étant en communication avec un trajet de décharge (161, 301).

4. Machine à café expresso selon l'une quelconque des revendications précédentes de 1 à 3, dans lequel lesdits moyens de poinçonnage comprennent une dent (262) qui est pratiquement cylindrique en coupe, ladite dent comportant une pointe (272), une cavité de décharge de grande taille (292) étant prévu entre ladite pointe (272) et une base de ladite dent (262).
